# DEMANDE DE BREVET EUROPEEN

(11) **EP 1 577 728 A1**
(43) Date de publication de la demande: **21.09.2005**
(21) Numéro de dépôt: 05290521.3
(22) Date de dépôt: 08.03.2005
(51) Int. Cl.: G05D 23/13

(54) **Dispositif de programmation de moyens de chauffage**

(30) Priorité: 15.03.2004 FR 0402638
(71) Demandeur: Atlantic Industrie, 85000 La Roche sur Yon (FR)
(72) Inventeur: Bony, Yves, 85170 Dompierre sur Yon (FR)
(74) Mandataire: Kaspar, Jean-Georges

(57) **Abrégé**

Un dispositif de programmation de moyens de chauffage est conformé en module connectable et déconnectable du moyen de chauffage à programmer, pour faire fonctionner ce moyen de chauffage en mode de fonctionnement économique ou en mode de confort. Ce dispositif comporte un boîtier (1) portant en combinaison un écran (2) d'affichage à cristaux liquides de la programmation effectuée, un organe (3) de défilement, un organe (4) de modification et un organe (5) de validation des étapes de programmation, ainsi qu'un indicateur (7) à clignotement temporaire du bon état de connexion du dispositif.

## Description

L'invention est relative à un dispositif de programmation de moyens de chauffage formant module connectable et déconnectable du moyen de chauffage à programmer.

L'invention s'applique à tous types de moyens de chauffage : chaudières à fioul ou à gaz, convecteurs électriques, radiants, sèche-serviettes, planchers chauffants ou autres installations centralisées ou non et régulées par thermostat électronique ou mécanique.

Les nombreux programmateurs existant sur le marché se répartissent en deux genres : d'une part, les programmateurs à programmation préalable et, d'autre part, les programmateurs à programmation et indication simultanées.

On connaissait notamment, d'une part, des installations de chauffage dans lesquelles des boîtiers de programmation incorporés dans des convecteurs programmables pilotent non seulement le convecteur programmable, mais également un ensemble de convecteurs électroniques programmables équipés d'un fil pilote reliant les convecteurs pilotés au convecteur programmable précité.

On pouvait affecter un programme différent à chaque jour de la semaine. Avant de rentrer les programmes en mémoire, on préparait et on écrivait à l'avance son choix pour chaque jour de la semaine. Pour éviter de retourner sans cesse le boîtier pour avoir le menu des programmes, il était conseillé de préparer sa programmation en remplissant un tableau pour une semaine. En cas de mise hors tension du programmeur supérieure à huit heures, le redémarrage se faisait automatiquement en position hors gel. Il fallait alors recommencer toutes les étapes de mise en service.

Le document FR 2 711 230 décrit, d'autre part, un procédé de régulation de chauffage, dans lequel on utilise au moins un module de programmation pour établir des programmes de chauffage et de commande de radiateurs électriques à thermostat, convecteurs ou appareils chauffants analogues.

Le dispositif du document FR 2 711 230 forme un module de programmation de chauffage et comporte une horloge indiquant le jour de la semaine et l'heure ainsi qu'au moins deux rangées de vingt-quatre micro-interrupteurs déplaçables entre deux positions prédéterminées, de manière à régler sur chaque dite rangée un programme journalier de chauffage. Chaque micro-interrupteur correspond à un intervalle de temps d'une heure.

Un premier but de l'invention est de perfectionner l'état de la technique, en réduisant le nombre d'organes à actionner pour effectuer la programmation, tout en conservant les avantages d'une indication et d'une programmation simultanées obtenus grâce au dispositif du document FR 2 711 230.

Un deuxième but de l'invention est de faciliter la programmation par l'utilisation de séquences de programmation naturelles et ergonomiques.

L'invention a pour objet un dispositif de programmation de moyens de chauffage, formant module connectable et déconnectable du moyen de chauffage à programmer, pour faire fonctionner ce moyen de chauffage en mode de fonctionnement économique ou en mode de confort, caractérisé par le fait que le dispositif comporte un boîtier portant en combinaison un écran d'affichage à cristaux liquides de la programmation effectuée, un organe de défilement, un organe de modification et un organe de validation des étapes de programmation, ainsi qu'un indicateur à clignotement temporaire du bon état de connexion du dispositif.

Selon d'autres caractéristiques alternatives de l'invention :
- l'écran d'affichage comporte une zone de réglage et d'affichage d'horloge et au moins deux zones de programmation de chauffage ;
- chaque zone de programmation comporte un bloc de sélection horaire et un bloc d'affectation journalier ;
- l'organe de défilement coopère avec un microcontrôleur contenu dans le boîtier, pour activer séquentiellement des zones ou des blocs de l'écran d'affichage, en vue de leur validation ou de leur modification ;
- l'organe de validation coopère avec un microcontrôleur contenu dans le boîtier, pour valider une modification lors d'un simple actionnement ou pour terminer une séquence de programmation lors d'un appui double ou multiple ;
- l'organe de modification coopère avec un microcontrôleur contenu dans le boîtier pour sélectionner une zone ou un bloc de l'écran d'affichage après son activation par l'organe de défilement, puis pour modifier séquentiellement un élément affiché, en vue de réaliser sa programmation ;
- les organes de validation et de modification coopèrent avec un microcontrôleur contenu dans le boîtier, pour mettre le dispositif en veille permanente par appui simultané ou maintenu sur lesdits organes de validation et de modification, en vue d'empêcher toute modification de la programmation du dispositif ;
- le déblocage ou la réactivation du dispositif est effectué par double appui, appui simultané ou appui maintenu desdits organes de validation et de modification ;
- le dispositif comporte un microcontrôleur programmé pour une mise en veille automatique du dispositif après écoulement d'un intervalle de temps prédéterminé, par exemple de plusieurs minutes.

L'invention sera mieux comprise grâce à la description qui va suivre donnée à titre d'exemple non limitatif en référence aux dessins annexés dans lesquels :
- La figure 1 représente schématiquement, une vue de face d'un dispositif selon l'invention.
- La figure 2 représente schématiquement un organigramme de réglage d'horloge de dispositif selon l'invention.
- La figure 3 représente schématiquement, un organigramme de programmation séquentielle de dispositif selon l'invention.
- La figure 4 représente schématiquement un organigramme d'affectation journalière de dispositif selon l'invention.
- La figure 5 représente schématiquement, un circuit électronique de dispositif selon l'invention.

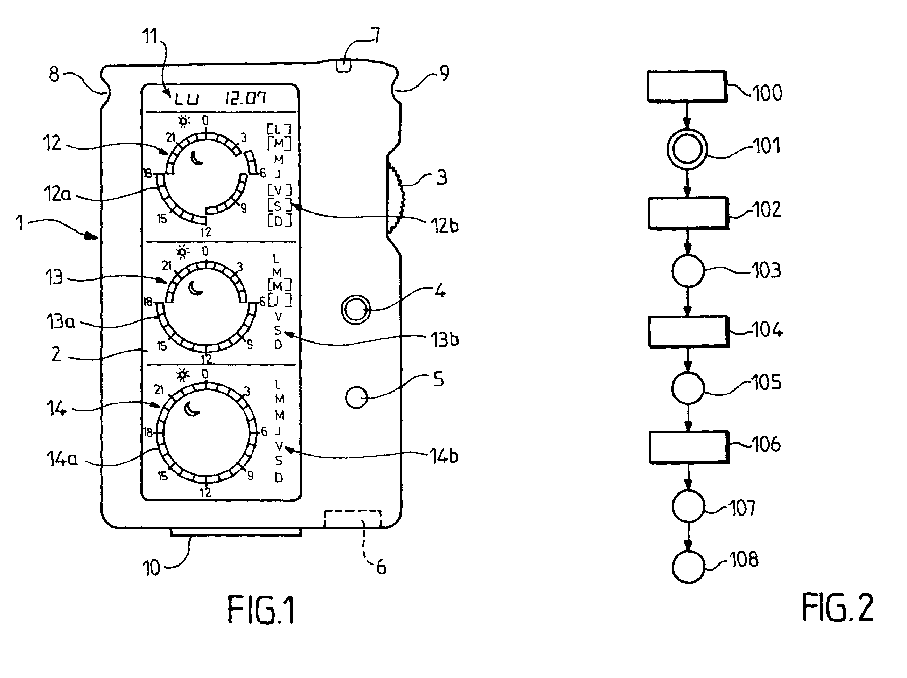

Sur la figure 1, un dispositif selon l'invention comporte un boîtier 1 portant un écran 2 d'affichage à cristaux liquides, une molette 3 de déplacement, un bouton poussoir 4 de modification et un bouton poussoir 5 de validation.

Le boîtier 1 contient également un connecteur 6 et une diode électroluminescente 7 apte à indiquer par un clignotement temporaire le bon enfichage du connecteur 6 sur un moyen de chauffage ou un thermostat.

Le boîtier 1 comporte également deux conformations 8 et 9 de préhension et un embout 10 de guidage pour l'insertion et la venue en butée mécanique du dispositif lors de son enfichage sur un moyen de chauffage.

L'écran d'affichage 2 est subdivisé en quatre zones : une première zone 11 d'horloge, une deuxième zone 12 de programmation comportant un bloc 12a séquentiel et un bloc 12b journalier, une troisième zone 13 de programmation comportant un bloc 13a séquentiel et un bloc 13b journalier, une quatrième zone 14 de programmation comportant un bloc 14a séquentiel et un bloc 14b journalier.

La zone 11 d'horloge permet l'affichage et le réglage du jour, de l'heure et des minutes.

Chaque bloc 12 a à 14 a séquentiel comporte de préférence vingt-quatre secteurs circulaires.

Chaque secteur circulaire correspond à une tranche horaire d'une journée et peut être affecté d'un indexage clair ou d'un indexage sombre : l'indexage clair correspond à un fonctionnement économique, tandis que l'indexage sombre correspond à un chauffage dit "de confort".

Chaque bloc 12b à 14b journalier comporte sept indications représentatives des jours d'une semaine, par exemple au moyen des lettres : L, M, M, J, V, S, D.

Chaque indication de jour peut être repérée ou pointée ou non : le repérage ou le pointage indique que le programme du bloc adjacent est effectué au jour repéré ou pointé, tandis que l'absence de repère ou de pointeur indique l'absence d'effet du programme du bloc adjacent pour ce jour.

Sur la figure 2, le réglage de la zone 11 d'horloge débute par une action 100 sur la molette 3 de défilement.

Cette action 100 fait clignoter la zone 11 d'horloge et est suivie par un appui simple 101 sur le bouton 4 de modification.

Cet appui simple 101 initie le réglage du jour de la semaine et provoque l'affichage clignotant d'un jour dans la zone 11 d'horloge.

Le jour désiré est choisi par un défilement 102 des jours par action sur la molette 3 de défilement.

Lorsque le jour désiré est en cours d'affichage dans la zone 11 d'horloge, un appui simple 103 sur le bouton 5 de validation sélectionne le jour désiré et provoque l'affichage clignotant des heures dans la zone 11 d'horloge.

L'heure désirée est choisie par un défilement 104 des heures au moyen de la molette 3 de défilement.

Lorsque l'heure désirée est en cours d'affichage dans la zone 11, un appui simple 105 sur le bouton 5 de validation sélectionne l'heure désirée et provoque l'affichage clignotant des minutes dans la zone 11.

Les minutes désirées sont choisies par un défilement 106 des minutes au moyen de la molette 3 de défilement.

Lorsque les minutes désirées sont en cours d'affichage dans la zone 14, un appui 107 sur le bouton 5 de validation sélectionne les minutes.

Le redoublement 108 de l'appui sur le bouton 5 de validation valide définitivement le réglage de la zone 11 d'horloge et termine la séquence de réglage.

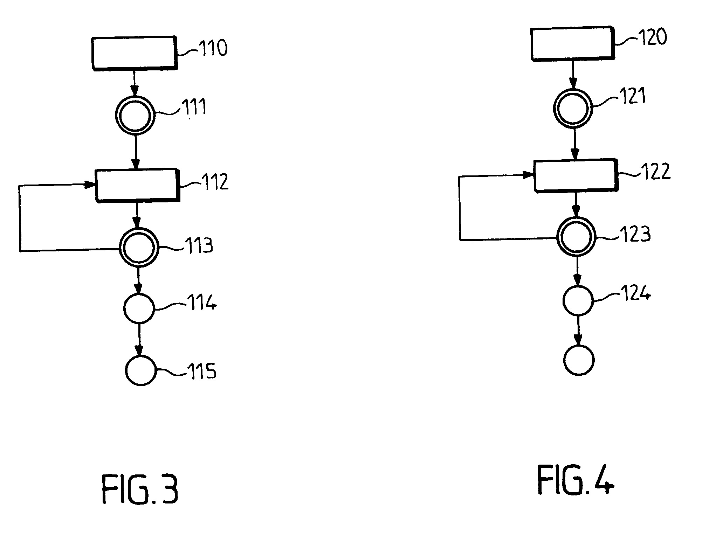

Sur la figure 3, un organigramme de programmation séquentielle débute par un défilement 110 de zones clignotantes de l'écran d'affichage à cristaux liquides.

Ce défilement 110 est obtenu à l'aide de la molette 3 de défilement.

Lorsque le bloc séquentiel désiré, par exemple 12a, clignote, un appui 111 sur le bouton 4 de modification sélectionne ce bloc séquentiel, par exemple 12a.

Un défilement 112 à l'aide de la molette 3 de défilement fait défiler les secteurs horaires par clignotement successif.

Lorsque le secteur horaire désiré clignote, et dans le cas où la consigne affichée n'est pas celle qui est souhaitée, un appui 113 sur le bouton 4 de modification affecte au secteur horaire sélectionné la consigne de fonctionnement contraire à la consigne affichée, soit en mode de fonctionnement économique si le secteur horaire était foncé, soit en mode dit "de confort" si le secteur horaire était clair.

On réitère ensuite les actions 112 à 113 jusqu'à affectation des consignes de tous les secteurs horaires, puis on termine la séquence par un appui 114 sur le bouton 5 de validation.

On termine la programmation totale par un deuxième appui 115 sur le bouton 5 de validation.

Sur la figure 4, un organigramme d'affectation journalière débute par un défilement 120 de zones clignotantes de l'écran 2 d'affichage à cristaux liquides.

Ce défilement 120 est obtenu à l'aide de la molette 3 de défilement.

Lorsque le bloc journalier désiré, par exemple 12b, clignote, un appui 121 sur le bouton 4 de modification sélectionne ce bloc journalier.

Un défilement 122 à l'aide de la molette 3 de défilement fait défiler les jours de ce bloc journalier par clignotement successif.

Lorsque le jour désiré clignote, un appui 123 sur le bouton 4 de modification affecte au jour sélectionné une consigne d'affectation ou de pointage : soit en mode d'effet du programme du bloc adjacent 12a pour ce jour ; soit en mode d'absence d'effet du programme du bloc adjacent 12a pour ce jour.

On réitère ensuite les actions 122 à 123 jusqu'à affectation des consignes de tous les jours, puis on termine la séquence par un appui 124 sur le bouton 5 de validation.

On termine la programmation totale par un deuxième appui 125 sur le bouton 5 de validation.

Du fait que les organigrammes des figures 3 et 4 sont identiques et correspondent à des actions naturelles, l'apprentissage de la programmation est intuitif et immédiat pour l'utilisateur.

Après programmation du dispositif, un appui double simultané ou prolongé sur les boutons 5 de validation et 4 de modification permet de désactiver le dispositif en le mettant en état de veille permanente, pour éviter une modification indésirable par des personnes non autorisées ou des enfants.

La réitération de l'appui double simultané ou prolongé sur les boutons 4 de modification et 5 de validation, ou inversement, réactive le dispositif et permet une nouvelle programmation.

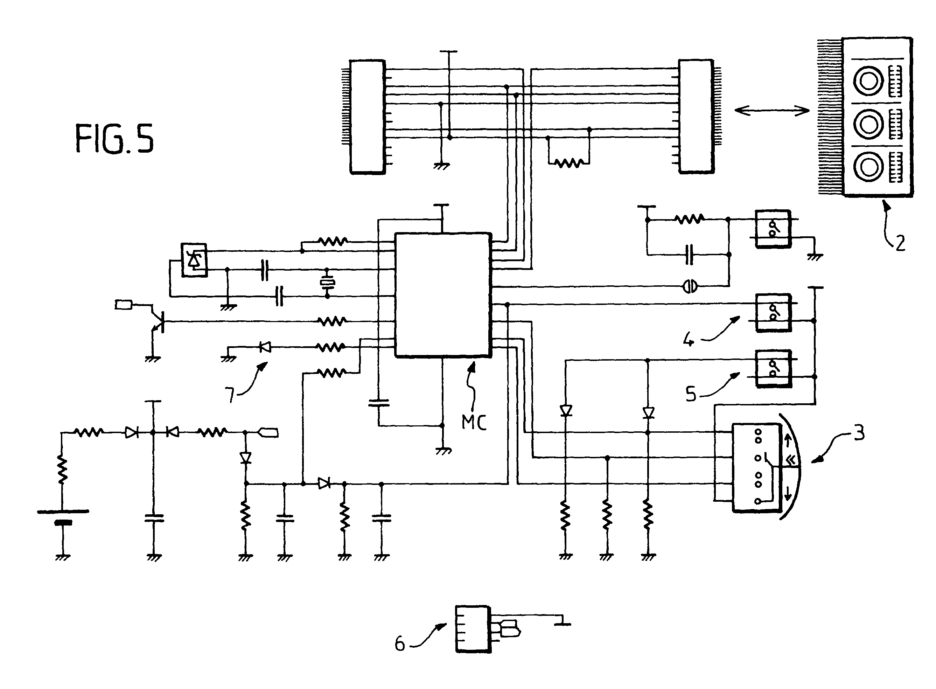

Sur la figure 5, le circuit électronique du dispositif est de préférence agencé autour d'un microcontrôleur MC programmé pour mettre en oeuvre les organigrammes des figures 2 à 4.

Le circuit électronique comporte les éléments 2, 3, 4, 5, 6 et 7 décrits en référence à la figure 1, étant précisé que l'écran 2 d'affichage à cristaux liquides est représenté non connecté par souci de clarté.

L'invention décrite en référence à un mode de réalisation particulier n'est nullement limitée à ce mode de réalisation, mais couvre au contraire toute modification de forme et toute variante de réalisation dans le cadre et l'esprit de l'invention

## Revendications

1. Dispositif de programmation de moyens de chauffage, formant module connectable et déconnectable du moyen de chauffage à programmer, pour faire fonctionner ce moyen de chauffage en mode de fonctionnement économique ou en mode de confort, **caractérisé par le fait que** le dispositif comporte un boîtier (1) portant en combinaison un écran (2) d'affichage à cristaux liquides de la programmation effectuée, un organe (3) de défilement, un organe (4) de modification et un organe (5) de validation des étapes de programmation, ainsi qu'un indicateur (7) à clignotement temporaire du bon état de connexion du dispositif.

2. Dispositif selon la revendication 1, **caractérisé par le fait que** l'écran (2) d'affichage comporte une zone (11) de réglage et d'affichage d'horloge et au moins deux zones (12-14) de programmation de chauffage.

3. Dispositif selon la revendication 2, **caractérisé par le fait que** chaque zone (12 ou 13 ou 14) de programmation comporte un bloc (12a ou 13a ou 14a) de sélection horaire et un bloc (12b ou 13b ou 14b) d'affectation journalier.

4. Dispositif selon la revendication 2 ou la revendication 3, **caractérisé par le fait que** l'organe (3) de défilement coopère avec un microcontrôleur (MC) contenu dans le boîtier, pour activer séquentiellement des zones (12 ou 13 ou 14) ou des blocs (12a ou 13a ou 14a; 12b ou 13b ou 14b) de l'écran (2) d'affichage, en vue de leur validation ou de leur modification.

5. Dispositif selon la revendication 1, **caractérisé par le fait que** l'organe (5) de validation coopère avec un microcontrôleur (MC) contenu dans le boîtier, pour valider une modification lors d'un simple actionnement ou pour terminer une séquence de programmation lors d'un appui double ou multiple.

6. Dispositif selon la revendication 2 ou la revendication 3, **caractérisé par le fait que** l'organe (4) de modification coopère avec un microcontrôleur (MC) contenu dans le boîtier pour sélectionner une zone (12 ou 13 ou 14) ou un bloc (12a ou 13a ou 14a ; 12b ou 13b ou 14b) de l'écran (2) d'affichage après son activation par l'organe de défilement, puis pour modifier séquentiellement un élément affiché, en vue de réaliser sa programmation.

7. Dispositif selon la revendication 1, **caractérisé par le fait que** les organes de validation (5) et de modification (4) coopèrent avec un microcontrôleur (MC) contenu dans le boîtier, pour mettre le dispositif en veille permanente par appui simultané ou maintenu sur lesdits organes de validation (5) et de modification (4), en vue d'empêcher toute modification de la programmation du dispositif.

8. Dispositif selon la revendication 7, **caractérisé par le fait que** le déblocage ou la réactivation du dispositif est effectué par double appui, appui simultané ou appui maintenu desdits organes de validation (5) et de modification (4).

9. Dispositif selon la revendication 1, **caractérisé par le fait que** le dispositif comporte un microcontrôleur (MC) programmé pour une mise en veille automatique du dispositif après écoulement d'un intervalle de temps prédéterminé, par exemple de plusieurs minutes.
